# EUROPÄISCHE PATENTSCHRIFT

(11) **EP 3 555 703 B1**
(45) Veröffentlichungstag und Bekanntmachung des Hinweises auf die Patenterteilung: **08.11.2023**
(21) Anmeldenummer: 17816610.4
(22) Anmeldetag: 05.12.2017
(51) Int. Cl.: G03B 17/00, G08B 13/00, G05D 3/00, G12B 5/00

(54) **VORRICHTUNG ZUR AUSRICHTUNG EINER INNERHALB EINES GEHÄUSES ANGEORDNETEN OPTISCHEN EINHEIT EINER KAMERA SOWIE KAMERA MIT DIESER VORRICHTUNG**
DEVICE FOR ORIENTATION OF AN OPTICAL UNIT OF A CAMERA, SAID OPTICAL UNIT BEING ARRANGED INSIDE A HOUSING, AND CAMERA HAVING SAID DEVICE
DISPOSITIF D'ALIGNEMENT D'UNE UNITÉ OPTIQUE D'UNE CAMÉRA DISPOSÉE À L'INTÉRIEUR D'UN BOÎTIER AINSI QUE CAMÉRA POURVUE DUDIT DISPOSITIF

(30) Priorität: 16.12.2016 DE 102016124668
(43) Veröffentlichungstag der Anmeldung: 23.10.2019
(73) Patentinhaber: DResearch Fahrzeugelektronik GmbH, 10319 Berlin (DE)
(72) Erfinder: WEBER, Michael, 12683 Berlin (DE)
(74) Vertreter: Gulde & Partner
(86) Internationale Anmeldenummer: PCT/EP2017/081508
(87) Internationale Veröffentlichungsnummer: WO 2018/108626

(56) Entgegenhaltungen:
- DE-U1-202016 002 468
- JP-B2- 3 537 002
- TW-A- 200 532 175
- US-A- 4 945 774
- US-A1- 2007 115 355
- US-A1- 2008 231 699
- US-A1- 2014 233 935

## Beschreibung

Die Erfindung betrifft eine Vorrichtung zur Ausrichtung einer innerhalb eines Gehäuses angeordneten optischen Einheit einer Kamera relativ zu einem Montageort der Kamera. Es ist bekannt, Kameras bei unterschiedlichen Einsatzzwecken fest an einem Montageort zu installieren. Dies kann beispielsweise an einer Gebäudewand oder bei Fahrzeugen, beispielsweise Schienenfahrzeuge oder Straßenfahrzeuge an der Karosserie erfolgen. Je nach Einsatzzweck der Kamera soll die optische Einheit einen bestimmten Ausschnitt der Umgebung des Montageortes erfassen. Bei Fahrzeugen können dies beispielsweise Rückspiegelkameras, Seitenkameras und/oder Rückfahrkameras sein.

Das Gehäuse, in dem sich die optischen und/oder elektronischen Komponenten der Kamera befinden, ist mit dem Montageort üblicherweise starr verbunden. Eine Ausrichtung der optischen Einheit der Kamera auf das gewünschte zu überwachende Umfeld muss also innerhalb des Gehäuses erfolgen. Bekannt ist, die optische Einheit innerhalb des Gehäuses beweglich zu lagern. Hierzu muss das Gehäuse der Kamera geöffnet werden, um die optische Einheit auszurichten. Dabei ist nachteilig, dass das Ausrichten der optischen Einheit nicht an jedem Ort und nicht unter allen äußeren Bedingungen erfolgen kann. So würden z. B. in staubbelasteten oder feuchten Umgebungen Optik und Elektronik der optischen Einheit beim Öffnen des Gehäuses diesen Bedingungen ausgesetzt sein, was zu erheblichen Beeinträchtigungen der Funktionalität oder der Parameter der Kamera führen kann. Bei Fahrzeugen erfolgt daher das Ausrichten der optischen Einheit in der Regel in Innenräumen, wie beispielsweise in den Hallen eines Betriebshofes oder dergleichen.

Durch das Öffnen des Gehäuses sind sensible Teile der Kamera, insbesondere die optische Einheit, aber auch feinmechanische Komponenten nicht mehr geschützt und können durch unsachgemäße Behandlung oder Umgebungseinflüsse gefährdet werden.

Durch die Notwendigkeit, das Gehäuse für das Ausrichten zu öffnen, werden die Möglichkeiten, Feuchtigkeit oder Staub von sensiblen Komponenten innerhalb des Gehäuses wirksam fernzuhalten und nachhaltig eine hohe Dichtigkeit des Gehäuses zu gewährleisten, beeinträchtigt.

Auch ist bekannt, innerhalb der Gehäuse hygroskopische Materialien vorzusehen, die während des Fertigungsprozesses in die Kamera eingebracht wurden, um evtl. vorhandene Feuchtigkeit zu binden. Durch Öffnen des Gehäuses kann dieses hygroskopische Material mit Feuchtigkeit gesättigt werden und so seine Funktion verlieren.

US 2007/0115355 A1 offenbart eine fernsteuerbare Kamera. Hier ist eine optische Einheit innerhalb eines Gehäuses angeordnet. Die optische Einheit ist mittels elektromechanischer Verstellmechanismen verlagerbar. Zur Ansteuerung dieses Verstellmechnismus ist ein entfernt angeordneter Joystick über eine Signalleitung mit der Kamera verbunden.

JP 3537002 B2 offenbart einen innerhalb eines Gehäuses angeordneten Lagesensor. Eine Positionsänderung des Lagesensors wird auf einen außerhalb eines Gehäuses angeordneten Gegenstand übertragen, wobei hier eine Magnetkopplung besteht.

TW 200 532 175 A und US 4,945,774 A1 offenbaren jeweils Vorrichtungen zur Übertragung von Antriebsenergie von einer außerhalb eines Gehäuses antreibbaren Welle auf eine innerhalb eines Gehäuses gelagerten Welle. Hierzu ist ein äußerer Magnetfeldgenerator und ein innerer Magnetfeldgenerator vorgesehen.

Das Ausrichten der optischen Einheit einer Kamera ist somit relativ aufwendig und stellt höhere Anforderungen an die Qualifikation des Ausführenden.

Der Erfindung liegt daher die Aufgabe zugrunde, eine Vorrichtung zur Ausrichtung einer innerhalb eines Gehäuses angeordneten optischen Einheit einer Kamera sowie eine Kamera mit einer derartigen Vorrichtung zu schaffen, bei denen in einfacher und sicherer Weise das Ausrichten der optischen Einheit möglich ist.

Erfindungsgemäß wird diese Aufgabe durch eine Vorrichtung mit denen im Anspruch 1 genannten Merkmalen gelöst. Dadurch, dass die Kamera ein Einstellmittel umfasst, dessen Betätigungsteil mit einem Tragteil der optischen Einheit wirkverbunden ist, wobei das Betätigungsteil außerhalb des Gehäuses und das Tragteil innerhalb des Gehäuses angeordnet sind und das Betätigungsteil und somit das Einstellmittel von einem diametral magnetisierten Magneten gebildet ist und das Tragteil zumindest an seiner dem Betätigungshebel zugewandten Seite einen diametral magnetisierten Magneten umfasst, ist vorteilhaft möglich, eine Einstellung, das heißt Ausrichtung der optischen Einheit der Kamera ohne Öffnen des Gehäuses durchzuführen. Somit sind die aus dem Stand der Technik bekannten Nachteile vermieden. Auch sind die Anforderungen an die Qualifikation eines Ausführenden für das Ausrichten der optischen Einheit nicht mehr so hoch. Es ist also kein Spezialist für die Kamera mehr erforderlich, um die optische Einheit auszurichten.

Die diametral magnetisierten Magnete, die an den einander zugewandten Seiten des Betätigungsteils und des Tragteils angeordnet sind, stellen ihre Wirkverbindung durch die Gehäusewand durch Magnetkraft her. Wird also das Betätigungsteil bewegt, wird über den diametral magnetisierten Magneten des Betätigungsteils der diametral magnetisierte Magnet des Tragteils und somit das Tragteil selbst entsprechend mitbewegt. Die an dem Tragteil angeordnete optische Einheit lässt sich so in einfacher Weise ausrichten.

Dies ist insbesondere dadurch möglich, dass die diametral magnetisierten Magnete an dem Betätigungsteil und an dem Tragteil so ausgerichtet sind, dass sich der Nordpol des Magneten des Betätigungsteils und der Südpol des Magneten des Tragteils gegenüberliegen. Entsprechend liegen sich der Südpol des Magneten des Betätigungsteils und der Nordpol des Magneten des Tragteils gegenüber. Wird nun das Betätigungsteil, das heißt der dort vorhandene Magnet bewegt, folgt der Magnet und somit das Tragteil dieser Bewegung.

Bei diametral magnetisierten Magneten handelt es sich um Magnete, bei denen Nordpol und Südpol quer zu einer Längsachse des Magneten angeordnet sind.

In bevorzugter Ausgestaltung der Erfindung ist vorgesehen, dass die Magnete diametral magnetisierte Ringmagnete sind. Hierdurch wird vorteilhaft möglich, durch Betätigen des Betätigungsteils in einfacher Weise eine Ausrichtung der optischen Einheit in einer planaren Ebene beliebig einzustellen.

In weiterer bevorzugter Ausgestaltung ist vorgesehen, dass zumindest in einem Einstellbereich des Einstellmittels eine Wandung des Gehäuses sphärisch ausgebildet ist und die einander zugewandten Seiten der diametral magnetisierten Magnete des Betätigungsteils und des Tragteils zu der Gehäusewand korrespondierende Krümmungen aufweisen. Dies bedeutet, der äußere Magnet des Betätigungsteils besitzt eine der sphärischen Ausbildung des Gehäuses entsprechende konkave Ausnehmung und der Magnet des Tragteils eine konvexe Wölbung. Hierdurch wird erreicht, dass der Abstand der Massenzentren der Magnete im gesamten Einstellbereich minimal (und damit die magnetische Anziehungskraft maximal) ist und die Magnete in Richtung aller Tangenten an die Sphäre in der aktuellen Position der Magnete über das sphärisch ausgebildete Gehäuse geführt und um die zur Sphäre vertikale Achse gedreht werden können. Die optische Einheit lässt sich somit in einfacher Weise in beliebigen Raumrichtungen justieren bzw. ausrichten. Es sind also beliebige Verschiebungen und Drehungen der Magnete und somit der optischen Einheit möglich.

Darüber hinaus ist in bevorzugter Ausgestaltung der Erfindung vorgesehen, dass die Grenzflächen zwischen dem Gehäuse und der dem Betätigungsteil im Einstellbereich mit einer die Haftreibung zwischen Gehäuse und Betätigungsteil erhöhenden Beschichtung versehen sind. Hierdurch wird vorteilhaft erreicht, dass das Betätigungsteil infolge des durch die magnetische Anziehung beider Magnete bewirkten großen Anpressdrucks an der äußeren Gehäuseoberfläche auf dem Gehäuse sicher fixiert ist. Bei der Beschichtung handelt es sich vorzugsweise um eine Flüssiggummibeschichtung, die auf der Außenseite des Gehäuses und/oder auf der dem Gehäuse zugewandten Seite des Magneten aufgebracht ist.

In weiterer bevorzugter Ausgestaltung der Erfindung ist vorgesehen, dass das Betätigungsteil und somit das Einstellmittel von dem diametral magnetisierbaren Magneten selbst gebildet wird. Hierdurch lässt sich dieses in einfacher Weise realisieren. Darüber hinaus ist bevorzugt vorgesehen, dass der diametral magnetisierte Magnet des Betätigungsteiles mit einer Aufnahme für ein externes Handhabungsteil versehen ist. Hierdurch wird möglich, die magnetische Anziehung zwischen dem Magneten des Betätigungsteils und den Magneten des Tragteils so groß zu wählen, dass eine Verlagerung des Betätigungsteils und somit die Ausrichtung der optischen Einheit nur durch Krafteinbringung über das externe Handhabungsteil möglich wird. Die Aufnahme kann beispielsweise von einer sechskantförmigen Ausnehmung in dem Magneten gebildet sein, in die ein Imbusschlüssel oder dergleichen eingreifen kann. Die Formmerkmale der Ausnehmung und des Handhabungsteils können so ausgestaltet sein, dass nur spezielle Handhabungsteile mit dem Betätigungsteil koppelbar sind.

Die Aufgabe wird ferner durch eine Kamera mit den im Anspruch 8 genannten Merkmalen gelöst. Dadurch, dass die Kamera eine erfindungsgemäße Vorrichtung aufweist, kann die optische Einheit der Kamera nach zuvor erfolgter fester Verbindung der Kamera am Montageort dennoch eine Einstellung, das heißt Ausrichtung der optischen Einheit erfolgen, ohne dass das Gehäuse der Kamera geöffnet werden muss.

Weitere bevorzugte Ausgestaltungen der Erfindung ergeben sich aus den übrigen, in den Unteransprüchen genannten Merkmalen.

Die Erfindung wird nachfolgend anhand der Ausführungsbeispiele der zugehörigen Zeichnungen näher erläutert. Die Figuren zeigen:
- Figur 1: eine erfindungsgemäße Vorrichtung mit einem planbaren Einstellbereich für eine optische Einheit;
- Figur 2: eine erfindungsgemäße Vorrichtung mit einem dreidimensionalen Einstellbereich;
- Figuren 3-5: eine erfindungsgemäße Kamera in einem ersten Ausführungsbeispiel; und
- Figuren 6-7: eine erfindungsgemäße Kamera in einem zweiten Ausführungsbeispiel.

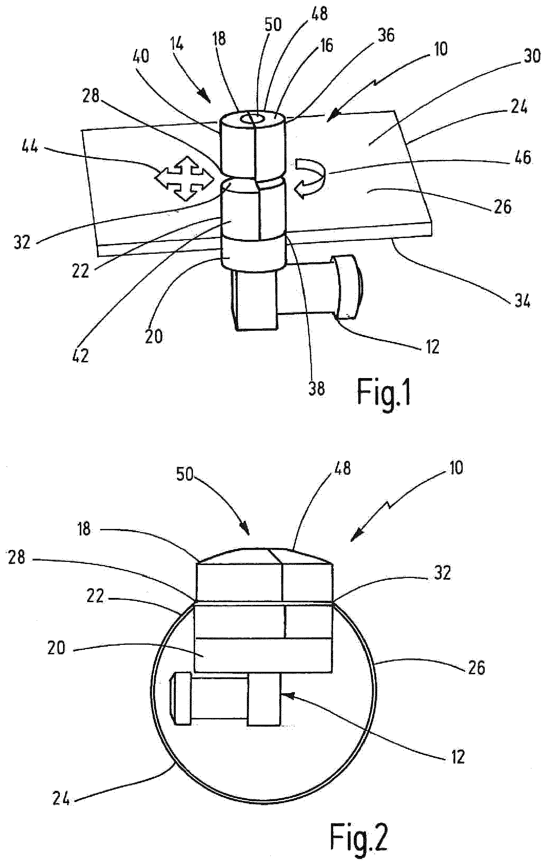

Figur 1 zeigt schematisch eine insgesamt mit 10 bezeichnete Vorrichtung zur Ausrichtung einer optischen Einheit 12. Die Vorrichtung 10 umfasst ein Einstellmittel 14, das ein Betätigungsteil 16 aufweist. Das Betätigungsteil 16 wird von einem diametral magnetisierten Ringmagneten 18 gebildet.

Die optische Einheit 12 ist an einem Tragteil 20 angeordnet. Das Tragteil 20 umfasst einen diametral magnetisierten Ringmagneten 22. Die Ringmagneten 18 und 22 sind an gegenüberliegenden Seiten eines Gehäuses 24 angeordnet.

Das Gehäuse 24 ist in Figur 1 nur ausschnittsweise dargestellt und bildet einen Einstellbereich 26 aus. Das Gehäuse 24 bzw. der Einstellbereich 26 ist zwischen den Ringmagneten 18 und 22 angeordnet. In Figur 1 wurde auf eine gestrichelte Darstellung der unterhalb des Gehäuses 24 liegenden Teile aus Gründen der Übersichtlichkeit verzichtet.

Der Ringmagnet 16 liegt mit seiner - gemäß der Figur 1 - unteren Stirnseite 28 auf einer oberen Fläche 30 des Einstellbereichs 26 an. Der Ringmagnet 22 liegt mit seiner oberen Stirnseite 32 an einer unteren Fläche 34 des Einstellbereichs 26 an.

Die diametral magnetisierten Ringmagnete 18 und 22 sind so angeordnet, dass sich ein Nordpol 36 des Ringmagneten 18 einem Südpol 38 des Ringmagneten 22 und einen Südpol 40 des Ringmagneten 18 einem Nordpol 42 des Ringmagneten 22 gegenüberliegen.

Durch die in Figur 1 gezeigte schematische Darstellung der Vorrichtung 10 wird es möglich, durch Betätigen des Betätigungsteils 16, also des Ringmagneten 18, die optische Einheit 12 auszurichten. Entsprechend der planaren Ausbildung des Einstellbereichs 26 kann hierbei eine Ausrichtung der optischen Einheit 12 in zwei Richtungen translatorisch und um eine Achse senkrecht zum Einstellbereich 26 rotatorisch bewegt werden. Die translatorische Bewegung ist durch die Pfeilkombination 44 und die translatorische Bewegung durch den Pfeil 46 angedeutet.

Figur 2 zeigt schematische die Vorrichtung 10 zur Ausrichtung der optischen Einheit 12 in drei Raumrichtungen. Gleiche Teile wie in Figur 1 sind mit gleichen Bezugszeichen versehen und nicht nochmals erläutert. Das Gehäuse 24 ist kugelförmig ausgebildet und besitzt somit einen sphärischen Einstellbereich 26. Innerhalb des Gehäuses 24 ist die optische Einheit 12, das Tragteil 20 sowie der Ringmagnet 22 angeordnet. Außerhalb des Gehäuses 24 ist der Ringmagnet 18 angeordnet.

In Anpassung an den sphärischen Einstellbereich 26 des Gehäuses 24 besitzt der Ringmagnet 18 an seiner dem Gehäuse 24 zugewandten Stirnseite 28 eine korrespondierende sphärische konkave Einbuchtung. Der Ringmagnet 22 besitzt eine zum sphärischen Einstellbereich 26 korrespondierende sphärische Wölbung an seiner oberen Stirnseite 32.

Durch die in Figur 2 gezeigte Anordnung der Vorrichtung 10 wird möglich, die optische Einheit 12 durch Bewegen des Ringmagneten 18 über die äußere Kugelfläche des Gehäuses 24 beliebig in allen drei Raumrichtungen zu orientieren. Bei einer an dem äußeren Ringmagneten 18 angreifenden Verstellkraft folgt der innere Magnet 22 und somit das Tragteil 20 und die optische Einheit 12 dieser Bewegung aufgrund der magnetischen Anziehungskraft zwischen den Ringmagneten 18 und 22.

Der sphärische Einstellbereich 26 des Gehäuses 24 bildet somit gleichzeitig eine Führungsfläche sowohl für den äußeren Ringmagneten 18 als auch den inneren Ringmagneten 22.

An seiner Oberseite 48 besitzt der Ringmagnet 18 eine Aufnahme 50 für ein nichtdargestelltes externes Handhabungsteil. Die Aufnahme 50 kann beispielsweise von einem sechseckigen Sackloch gebildet sein, in die ein Imbusschlüssel eingreifen kann. Durch das externe Handhabungsteil kann die Haftkraft zwischen dem äußeren Ringmagneten 18 und der Gehäusewand überwunden werden, sodass das Einstellen der optischen Einheit 12 erleichtert möglich ist.

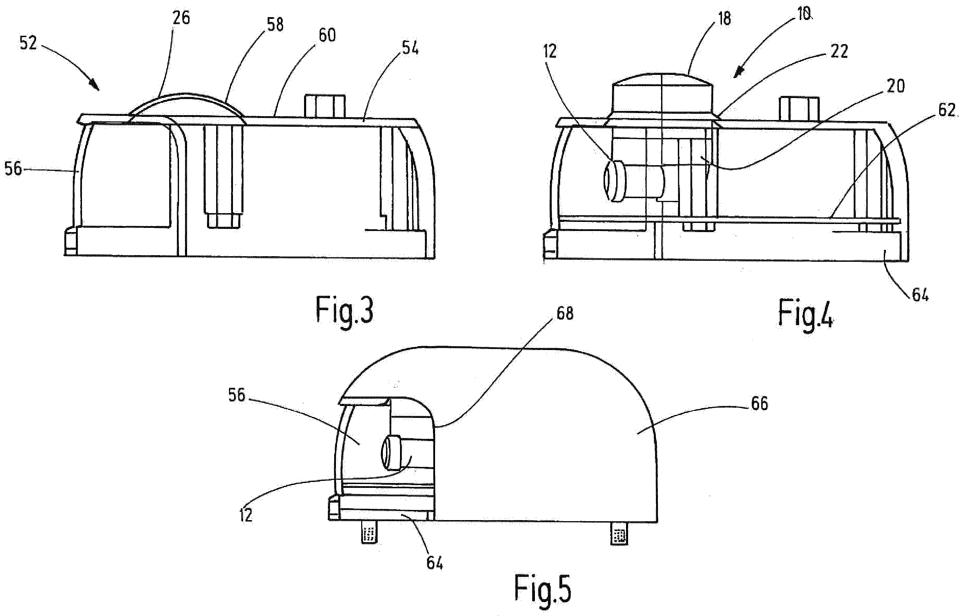

Anhand der Figuren 3 bis 5 wird die zuvor allgemein erläuterte Vorrichtung 10 am Beispiel einer Rückspiegel-Kamera 52 für Fahrzeuge, insbesondere für Straßen- und Schienenfahrzeuge erläutert.

Die Kamera 52 umfasst zunächst ein inneres Gehäuse 54, das zumindest abschnittsweise aus einem transparenten Material besteht. Hierdurch ergibt sich ein Sichtfenster 56 für eine innerhalb des Gehäuses 54 angeordnete optische Einheit 12. Das innere Gehäuse 54 besitzt eine sphärische Ausstülpung 58 an der Oberseite 60.

Innerhalb des Gehäuses 54 ist, wie Figur 4 verdeutlicht, die optische Einheit 12 mittels der Vorrichtung 10 angeordnet. Aufbau und Funktion der Vorrichtung 10 entspricht dem anhand von Figur 2 erläuterten grundsätzlichen Aufbau und Wirkungsweise. Der sphärische Einstellbereich 26 wird hier von der sphärischen Ausstülpung 58 übernommen.

Durch Bewegen des Ringmagneten 18 über die sphärische Ausstülpung 58 kann somit die optische Einheit 12 in drei Raumrichtungen ausgerichtet werden. Die Grenzen der Ausrichtung ergeben sich durch Größe und Form der sphärischen Ausstülpung 58. Die optische Einheit 12 kann somit innerhalb des Sichtfensters 56 auf einen zu überwachenden Sichtbereich optimal ausgerichtet werden. Dieses Ausrichten kann hierbei erfolgen, ohne dass das Gehäuse 54 geöffnet werden muss. Innerhalb des Gehäuses 54 befindet sich die optische Einheit 12 sowie eine hier lediglich angedeutete Leiterkarte 62, die für den Betrieb und die Funktion der optischen Einheit 12 erforderliche elektronische Komponenten enthält. An seiner Unterseite ist das Gehäuse 54 durch eine Abschlussplatte 64 verschlossen.

Die Abschlussplatte 64 dient gleichzeigt der Montage des Gehäuses 54 mit der darin angeordneten optischen Einheit 12 an einem Karosserieteil des Straßen- bzw. Schienenfahrzeuges.

Wie Figur 5 zeigt, wird das Gehäuse 54 nach außen durch eine Abdeckung 66 verschlossen, die sowohl die Vorrichtung 10 als auch das Gehäuse 54 schützt. Im Bereich des Sichtfensters 56 besitzt die Abdeckung 66 eine entsprechende Aussparung 68.

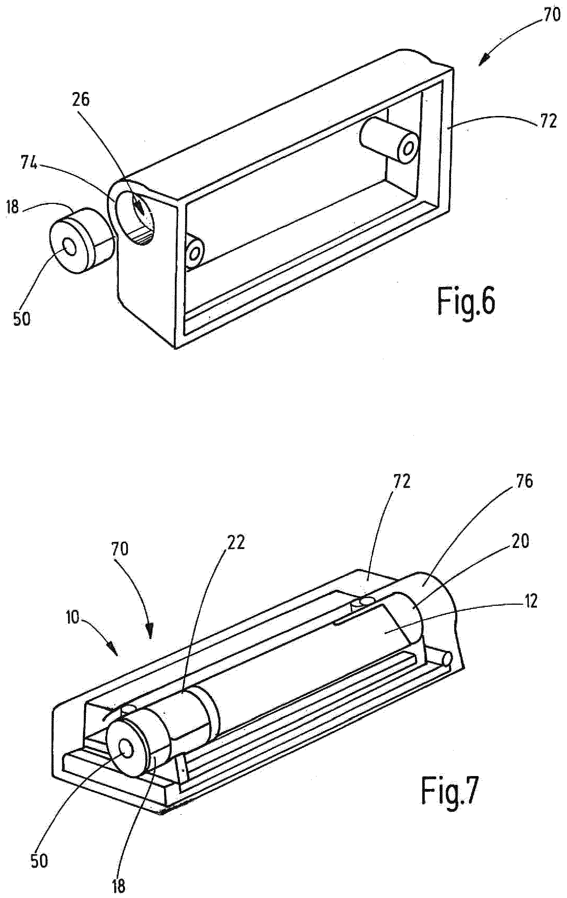

In den Figuren 6 und 7 wird der Einsatz der erfindungsgemäßen Vorrichtung 10 an einer Seiten- und/oder Rückfahr-Kamera 70 für Fahrzeuge, insbesondere Straßen- und Schienenfahrzeuge verdeutlicht.

Die Kamera 70 besitzt ein Gehäuse 72 innerhalb dem eine optische Einheit 12 angeordnet ist. Die optische Einheit 12, die beispielsweise von einem elektronischen Kameramodul gebildet wird, befindet sich auf einem rotierbar angeordneten Tragteil 20. An dem Tragteil 20 ist der Ringmagnet 22 angeordnet. Das Gehäuse 72 besitzt eine kreisförmige Ausnehmung 74, innerhalb der der Ringmagnet 18 anordbar ist. Eine Grundfläche der Ausnehmung 74 bildet den Einstellbereich 26. Die Ausnehmung 74 ist so ausgebildet, dass der Ringmagnet 18 dort formschlüssig aufgenommen werden kann.

Durch Drehen des Ringmagneten 18 um seine Längsachse wird über die magnetische Kopplung mit dem Ringmagnet 22 die optische Einheit 12 ebenfalls um ihre Längsachse verdreht. Hierdurch ist eine Ausrichtung der optischen Einheit 12 auf einen zu überwachenden Bereich in einfacher Weise möglich. Das Gehäuse 72 besitzt im Bereich der optischen Einheit 12 ein optisch transparentes Sichtfenster 76.

Anhand der vorstehenden Erläuterungen wird deutlich, dass mittels der erfindungsgemäßen Vorrichtung 10 Kameras 52, 70 geschaffen werden, bei denen die optische Einheit 12 ausgerichtet werden kann, ohne einen geschützten Innenbereich, in dem sich Elektronik und Optik oder Teile davon befinden, öffnen zu müssen. Das Ausrichten der optischen Einheit 12 ist sehr einfach, schnell und sicher. Das Ausrichten der optischen Einheit 12 erfolgt intuitiv und erfordert keine besonderen Qualifikationen, Umsicht oder Vorsichtsmaßnahmen und schließt nennenswerte Risiken für die Technik der Kameras 52, 70 aus.

### Bezugszeichen

- 10: Vorrichtung
- 12: optische Einheit
- 14: Einstellmittel
- 16: Betätigungsteil
- 18: Ringmagnet
- 20: Tragteil
- 22: Ringmagnet
- 24: Gehäuse
- 26: Einstellbereich
- 28: untere Stirnseite
- 30: obere Fläche
- 32: obere Stirnseite
- 34: untere Fläche
- 36: Nordpol
- 38: Südpol
- 40: Südpol
- 42: Nordpol
- 44: Faltkombination
- 46: Pfeil
- 48: Oberseite
- 50: Aufnahme
- 52: Kamera
- 54: inneres Gehäuse
- 56: Sichtfenster
- 58: Ausstülpung
- 60: Oberseite
- 62: Leiterkarte
- 64: Abschlussplatte
- 66: Abdeckung
- 68: Aussparung
- 70: Kamera
- 72: Gehäuse
- 74: kreisförmige Ausnehmung
- 76: optisch transparentes Sichtfenster

## Patentansprüche

1. Vorrichtung (10) zur Ausrichtung einer innerhalb eines Gehäuses (24, 54, 72) angeordneten optischen Einheit (12) einer Kamera (52, 70) relativ zu einem Montageort der Kamera (52, 70), mit einem Einstellmittel (14), dessen Betätigungsteil (16) mit einem Tragteil (20) der optischen Einheit (12) wirkverbunden ist,
wobei das Betätigungsteil (16) außerhalb des Gehäuses (24, 54, 72) und das Tragteil (20) innerhalb des Gehäuses (24, 72) angeordnet sind, **dadurch gekennzeichnet, dass** das Betätigungsteil (16) und somit das Einstellmittel (14) von einem diametral magnetisierten Magneten (18) gebildet ist und das Tragteil (20) zumindest an seiner dem Betätigungsteil (16) zugewandten Seite einen diametral magnetisierten Magneten (22) umfasst, sodass bei Bewegung des Betätigungsteils (16) das Tragteil (20) selbst entsprechend mitbewegt wird.

2. Vorrichtung (10) nach Anspruch 1,
**dadurch gekennzeichnet, dass**
die Magnete (18, 22) diametral magnetisierte Ringmagnete (18, 22) sind.

3. Vorrichtung (10) nach einem der vorhergehenden Ansprüche,
**dadurch gekennzeichnet, dass**
zumindest in einem Einstellbereich (26) des Einstellmittels (14) eine Wandung des Gehäuses (24) sphärisch ausgebildet ist und die einander zugewandten Stirnseiten (28, 32) der Ringmagnete (18, 20) zu der Gehäusewand korrespondierende Krümmungen aufweisen.

4. Vorrichtung (10) nach einem der vorhergehenden Ansprüche,
**dadurch gekennzeichnet, dass**
die Grenzflächen zwischen dem Gehäuse (24, 54, 72) und dem Betätigungsteil (16) im Einstellbereich (26) mit einer die Haftreibung zwischen Gehäuse (24, 54, 72) und Betätigungsteil (16) erhöhenden Beschichtung versehen ist.

5. Vorrichtung (10) nach Anspruch 4,
**dadurch gekennzeichnet, dass**
die Beschichtung auf der Gehäusewand und/oder auf dem Betätigungsteil (16) aufgebracht ist.

6. Vorrichtung (10) nach Anspruch 4 oder 5,
**dadurch gekennzeichnet, dass**
die Beschichtung eine Flüssiggummibeschichtung ist.

7. Vorrichtung (10) nach einem der vorhergehenden Ansprüche,
**dadurch gekennzeichnet, dass**
das Betätigungsteil (16) eine Aufnahme (50) für ein externes Handhabungsteil aufweist.

8. Kamera (52, 70),
**gekennzeichnet, durch**
eine Vorrichtung (10) nach einem der Ansprüche 1 bis 7.

9. Kamera nach Anspruch 8,
**dadurch gekennzeichnet, dass**
es sich um eine Rückspiegel-Kamera (52) für Straßen- und/oder Schienenfahrzeuge handelt.

10. Kamera nach Anspruch 8,
**dadurch gekennzeichnet, dass**
es sich um eine Seiten- und/oder Rückfahrkamera (70) für Straßen und/oder Schienenfahrzeuge handelt.

## Claims

1. Device (10) for aligning an optical unit (12) of a camera (52, 70) arranged within a housing (24, 54, 72) relative to a mounting location of the camera (52, 70), having an adjusting means (14) having an actuating part (16) which is operatively connected to a supporting part (20) of the optical unit (12),
wherein the actuating part (16) is arranged outside the housing (24, 54, 72) and the supporting part (20) is arranged inside the housing (24, 72), **characterised in that** the actuating part (16) and thus the adjusting means (14) is formed by a diametrically magnetised magnet (18) and the supporting part (20) comprises a diametrically magnetised magnet (22) at least on its side facing the actuating part (16), so that when the actuating part (16) is moved the supporting part (20) itself is moved accordingly.

2. Device (10) according to claim 1,
**characterised in that**
the magnets (18, 22) are diametrically magnetised ring magnets (18, 22).

3. Device (10) according to any one of the preceding claims,
**characterised in that**
at least in an adjustment region (26) of the adjusting means (14), a wall of the housing (24) is spherical and the mutually facing end faces (28, 32) of the ring magnets (18, 20) have curvatures corresponding to the housing wall.

4. Device (10) according to any one of the preceding claims,
**characterised in that**
the interfaces between the housing (24, 54, 72) and the actuating part (16) in the adjustment range (26) are provided with a coating which increases the static friction between the housing (24, 54, 72) and the actuating part (16).

5. Device (10) according to claim 4,
**characterised in that**
the coating is applied to the housing wall and/or to the actuating part (16).

6. Device (10) according to claim 4 or 5,
**characterised in that**
the coating is a liquid rubber coating.

7. Device (10) according to any one of the preceding claims,
**characterised in that**
the actuating part (16) has a receptacle (50) for an external handling part.

8. Camera (52, 70),
**characterised by**
a device (10) according to any one of claims 1 to 7.

9. Camera according to claim 8,
**characterised in that**
it is a rear-view mirror camera (52) for road and/or rail vehicles.

10. Camera according to claim 8,
**characterised in that**
it is a side and/or rear view camera (70) for road and/or rail vehicles.

## Revendications

1. Dispositif (10) pour orienter une unité optique (12) d'une caméra (52, 70) disposée à l'intérieur d'un boîtier (24, 54, 72) par rapport à un emplacement de montage de la caméra (52, 70), comprenant un moyen de réglage (14) dont la partie d'actionnement (16) est en liaison fonctionnelle avec une partie de support (20) de l'unité optique (12) , la partie d'actionnement (16) étant disposée à l'extérieur du boîtier (24, 54, 72) et la partie de support (20) étant disposée à l'intérieur du boîtier (24, 72), **caractérisé en ce que** la partie d'actionnement (16) et ainsi le moyen de réglage (14) sont formés par un aimant (18) magnétisé diamétralement et la partie de support (20) comprend au moins sur son côté tourné vers la partie d'actionnement (16) un aimant (22) magnétisé diamétralement, de sorte que lors du mouvement de la partie d'actionnement (16), la partie de support (20) elle-même est déplacée en conséquence.

2. Dispositif (10) selon la revendication 1,
**caractérisé en ce que**
les aimants (18, 22) sont des aimants annulaires (18, 22) magnétisés diamétralement.

3. Dispositif (10) selon l'une des revendications précédentes,
**caractérisé en ce que**
au moins dans une zone de réglage (26) du moyen de réglage (14), une paroi du boîtier (24) est réalisée de manière sphérique et les faces frontales (28, 32) des aimants annulaires (18, 20) tournées l'une vers l'autre présentent des courbures correspondant à la paroi du boîtier.

4. Dispositif (10) selon l'une des revendications précédentes,
**caractérisé en ce que**
les surfaces limites entre le boîtier (24, 54, 72) et la partie d'actionnement (16) sont pourvues, dans la zone de réglage (26), d'un revêtement augmentant le frottement d'adhérence entre le boîtier (24, 54, 72) et la partie d'actionnement (16).

5. Dispositif (10) selon la revendication 4,
**caractérisé en ce que**
le revêtement est appliqué sur la paroi du boîtier et/ou sur la partie d'actionnement (16).

6. Dispositif (10) selon la revendication 4 ou 5,
**caractérisé en ce que**
le revêtement est un revêtement en caoutchouc liquide.

7. Dispositif (10) selon l'une des revendications précédentes,
**caractérisé en ce que**
la partie d'actionnement (16) présente un logement (50) pour une partie de manipulation externe.

8. Caméra (52, 70),
**caractérisé par**
un dispositif (10) selon l'une quelconque des revendications 1 à 7.

9. Caméra selon la revendication 8,
**caractérisé en ce que**
il s'agit d'une caméra de rétroviseur (52) pour véhicules routiers et/ou ferroviaires.

10. Caméra selon la revendication 8,
**caractérisé en ce que**
il s'agit d'une caméra latérale et/ou de recul (70) pour véhicules routiers et/ou ferroviaires.
